# EUROPÄISCHE PATENTSCHRIFT

(11) **EP 0 481 234 B1**
(45) Veröffentlichungstag und Bekanntmachung des Hinweises auf die Patenterteilung: **13.07.1994**
(21) Anmeldenummer: 91115887.1
(22) Anmeldetag: 19.09.1991
(51) Int. Cl.: F16K 3/02

(54) **Schieber zum Absperren einer Rohrleitung**
Slide gate for closing a pipeline
Vanne d'arrêt pour fermer une conduite

(30) Priorität: 19.10.1990 DE 4033212
(43) Veröffentlichungstag der Anmeldung: 22.04.1992
(73) Patentinhaber: VERWALTUNGS LOHSE GmbH & Co. KG, D-89522 Heidenheim (DE)
(72) Erfinder: Burkhardt, Willi, W-7920 Heidenheim (Oggenhausen) (DE)
(74) Vertreter: Weitzel, Wolfgang, Dr.-Ing.

(56) Entgegenhaltungen:
- AT-B- 281 521
- DE-A- 2 700 206
- DE-B- 1 214 959
- GB-A- 1 260 114
- US-A- 4 176 673

## Beschreibung

Die Erfindung betrifft einen Schieber zum Absperren einer Rohrleitung gemäß dem Oberbegriff von Anspruch 1.

Ein Schieber dieser Art ist beispielsweise aus der DE-A-2 700 206 zu entnehmen.

Solche Schieber können mit einer einzigen Schieberplatte ausgerüstet sein. Für zahlreiche Anwendungsfälle hat sich aber auch der Doppelschieber bewährt. Hierbei sind zwei Schieberplatten in ein- und derselben Ebene angeordnet und gegenläufig antreibbar, so daß sich ihre freien Endkanten in Schließstellung berühren. Auch ist einer jeden Schieberplatte im allgemeinen ein motorischer Antrieb zugeordnet, beispielsweise ein hydraulischer oder pneumatischer Stellantrieb.

Zwischen den Außenflächen der Schieberplatte und den Innenflächen des Gehäuses ist jeweils ein enger Spalt vorhanden. Um ein Eindringen des in der Rohrleitung geführten Mediums in den Spalt zu verhindern, sind Dichtungen und Packungen vorgesehen. Diese liegen an der betreffenden Fläche der Schieberplatte an. Hierbei sollen im folgenden nur die Dichtungen betrachtet werden.

Beim Öffnen und Schließen der Schieberplatte gleitet diese auf der Dichtung. Hierbei entsteht Reibung und damit Verschleiß. Dies ist besonders dann der Fall, wenn die in der Rohrleitung geführte Flüssigkeit Feststoffe mit sich führt, z.B. Faserstoffe, oder gar abrasive Partikel. Es kommt dann zu ungleichmäßigem Verschleiß des Dichtungsmaterials. Die Folge hiervon ist, daß bei geöffneter Schieberplatte Flüssigkeit in die Spalte eindringt, zusammen mit Feststoffen, das wiederum zu einer völligen und starken Verschmutzung der beteiligten Flächen und des gesamten Gehäuse-Innenraumes führt sowie dazu, daß die Schieberplatte schwer gängig ist und schließlich sogar blockiert.

Man hat auch schon daran gedacht, in Verschieberichtung der Schieberplatte hintereinander liegend mehrere Dichtungen anzuordnen. Hierdurch wird zwar die Verschmutzung des Gehäuse-Innenraumes in Richtung auf den Antrieb hin verringert. Jedoch wird das Problem hierdurch nicht grundsätzlich gelöst.

Bei Schiebern gemäß dem Gattungsbegriff ist eine Seite der Schieberplatte in besonders hohem Maße dem Verschleiß ausgesetzt, vor allem dann, wenn die betreffende Rohrleitung Flüssigkeiten führt, die von Feststoffen durchsetzt sind, die abrasiv wirken. Diese Seite ist bei stehenden Rohrleitungen im allgemeinen die Oberseite. Ansonsten ist es die angeströmte Seite der Schieberplatte. Die Folge dieses einseitigen Verschleißes ist ein Ansetzen von Verunreinigungen in dem Spaltraum zwischen Schieberplatte und Gehäuse.

Der Erfindung liegt somit die Aufgabe zugrunde, Maßnahmen zu treffen, um einen übermäßigen Verschleiß der Schieberplatte auf deren einer Seite zu vermeiden.

Diese Aufgabe wird erfindungsgemäß durch einen Schieber mit den Merkmalen des Patentanspruchs gelöst.

Die Erfindung ist anhand der Zeichnung näher erläutert. Daran ist im einzelnen folgendes dargestellt:
- Figur 1: zeigt einen Doppelschieber in schematischer Darstellung und in Draufsicht auf die Rohrachse.
- Figur 2: zeigt einen Schieber in einem in der Rohrachse gelegten Schnitt, und zwar bei geschlossener Schieberplatte.
- Figur 3: zeigt einen Ausschnitt aus Fig. 2, wiederum bei geschlossener Schieberplatte.
- Figur 4: zeigt den Gegenstand von Fig. 3, jedoch bei geöffneter Schieberplatte.

Die in den Figuren dargestellten Schieber weisen die folgenden Elemente auf, die jeweils mit denselben Bezugszeichen versehen sind:
Gehäuse 1
Schieberplatte 2
Freie Endkante der Schieberplatte 3
Dichtlippe 4
sowie weitere, weniger wichtige Bauteile.

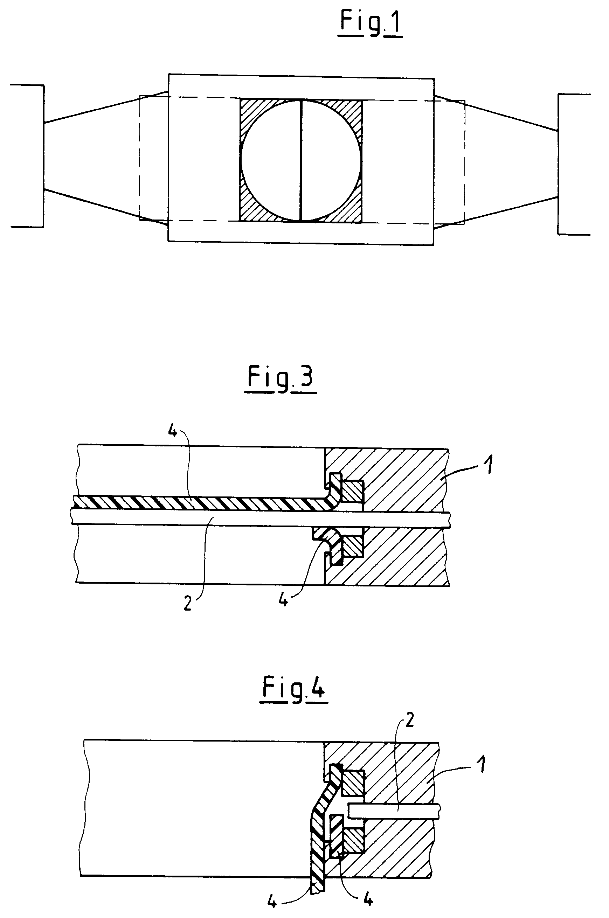

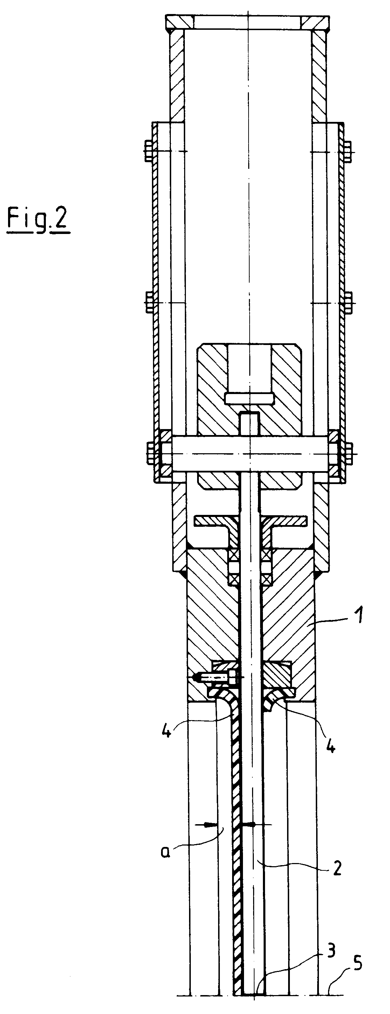

Das Wesen der Erfindung erkennt man sehr gut aus Fig. 2 und Fig. 3. . Die in Figur 2 und 3 erkennbare Schieberplatte 2 befindet sich in Schließstellung. Dabei befindet sich ihre freie Endkante 3 in der Darstellung der Fig. 3 ganz links, so daß sie mit der Achse 5 einer Rohrleitung zusammenfällt. Diese freie Endkante 3 berührt an dieser Stelle eine entsprechende Endkante der anderen Schieberplatte, die jedoch hier nicht dargestellt ist.

Wie man sieht, sind die beiden Dichtlippen 4 jeweils mit ihrem einen Ende im Gehäuse 1 fest eingespannt, während sie mit ihren freien Enden unter Bildung eines Viertelkreisbogens an der betreffenden Außenfläche der Schieberplatte 2 anliegen. Die freien Enden sind hierbei gegen die Achse 5 der Rohrleitung gerichtet.

Die Figuren 3 und 4 zeigen das Wesen der Erfindung noch genauer. Man erkennt aus Fig. 3, daß die obere Dichtlippe 4 an der Schieberplatte 2 in deren Schließstellung satt anliegt. Allein auf der Seite der oberen Dichtlippe 4 befindet sich Medium, das abzusperren ist, und das unter einem Druck steht. Dieses Medium ruht somit auf der oberen Dichtlippe 4. Diese obere Dichtlippe 4 schützt somit die Schieberplatte 2 gegen das Medium, das beispielsweise chemisch aggressiv oder mechanisch abrasiv sein kann.

In Fig. 4 ist die Schieberplatte 2 eingezogen, der Schieber somit geöffnet. Die obere Dichtlippe 4 hängt nunmehr schlaff herunter, so daß die Schieberöffnung freigegeben ist und Medium hindurchströmen kann. Die untere Dichtlippe 4 ist aufgrund ihrer Elastizität wieder in die geradlinige Form zurückgekehrt und befindet sich somit in der dargestellten, aufrechten Position.

## Patentansprüche

1. Schieber zum Absperren einer Rohrleitung, insbesondere Schieber mit zwei in einer Ebene angeordneten und gegenläufig antreibbaren Schieberplatten (2), mit einem den einzelnen Schieber umschließenden Gehäuse (1) und mit Lippendichtungen (4), die - in einem in der Rohrachse (5) gelegten Schnitt gesehen - mit dem einen Ende im Gehäuse (1) eingespannt sind und mit dem freien Ende auf der betreffenden Außenfläche der Schieberplatte (2) gleiten, mit den folgenden weiteren Merkmalen:
(a) die in Verschieberichtung befindliche Endkante (3) des freien Endes der Schieberplatte (2) verläuft geradlinig;
(b) die Dichtlippen (4) sind paarweise angeordnet und verlaufen ebenfalls geradlinig, wobei sich die beiden Dichtlippen (4) eines Paares beidseits der Schieberplatte (2) einander gegenüberliegen;
(c) die Dichtlippen (4) eines jeden Paares sind derart angeordnet, daß sich die Endkante (3) der betreffenden Schieberplatte (2) in Offen-Stellung auf der der Rohrleitung abgewandten Seite der Dichtlippen (4) befindet;
dadurch gekennzeichnet, daß
(d) die auf der einen Seite des Schiebers befindliche Dichtlippe bzw. -lippen (4) derart bemessen ist bzw. sind, daß der einzelne Schieber in geschlossenem Zustand von der Dichtlippe bzw. den Dichtlippen (4) weitgehend abgedeckt ist.

## Claims

1. Gate for closing of a pipeline, particularly gate comprising two sliding plates (2) which are located in a plain and which are driven in directions opposed to each other, further comprising a housing (1) envelopping each sliding plate, further comprising lip seals (4) which - as seen in a section in the axis (5) of the pipeline - with their one ends are fixedly attached within the housing (1), and with their three ends may slide on the outer surface of the respective sliding plate (2), comprising the following additional features:
(a) the edge (3) at the free end of the sliding plate (2) is of linear shape;
(b) the lip seals (4) are arranged in pairs, and also are of linear shape, whereby the two lip seals (4) of one pair are located on both sides of the sliding plate (2) opposed to each other;
(c) the lip seals (4) of each pair are arranged such that the end edge (3) of the respective sliding plate (2) in the open-position are located at the side of the lip seal (4) facing away from the pipeline;
(d) the lip seal respectively lip seals (4) located at the one side of the sliding plate is respectively are dimensioned such that the respective sliding plate in the closed condition is largely covered by the lip seal respectively lip seals (4).

## Revendications

1. Vanne d'arrêt pour une conduite de tuyauterie, en particulier vanne comportant deux plaques de vanne (2), disposées dans un plan et actionnées par un moteur en sens inverse, comportant un corps (1) renfermant la vanne et des garnitures à lèvres (4) lesquelles, vues selon une coupe située dans l'axe (5) de la tuyauterie, sont montées par une extrémité dans le corps (1) et coulissent par l'autre extrémité sur la face extérieure concernée de la plaque de vanne (2), vanne présentant les autres caractéristiques suivantes :
a) l'arête d'extrémité (3), dans le sens du déplacement, de l'extrémité libre de la plaque de vanne (2) s'étend en ligne droite ;
b) les lèvres d'étanchéité (4) sont disposées par paires et s'étendent également en ligne droite, les deux lèvres (4) de chaque paire se faisant mutuellement face des deux côtés de la plaque (2) ;
c) les lèvres d'étanchéité (4) de chaque paire sont disposées de telle sorte que l'arête d'extrémité (3) de la plaque de vanne correspondante (2) se trouve, en position ouverte, sur le côté desdites lèvres (4) opposé à la conduite de tuyauterie ;
caractérisé en ce que,
d) la lèvre ou les lèvres d'étanchéité (4) se trouvant d'un côté de la vanne sont dimensionnées de telle sorte que chaque vanne, à l'état fermé, est largement recouverte par la lèvre ou les lèvres d'étanchéité (4).
